**Europäisches Patentamt**

**European Patent Office**

**Office européen des brevets**

(19)

(11) Veröffentlichungsnummer : **0 477 168 A2**

## (12) EUROPÄISCHE PATENTANMELDUNG

(21) Anmeldenummer : **91890220.6**

(22) Anmeldetag : **19.09.91**

(51) Int. Cl.⁵ : $A47J\ 37/00$, $A47J\ 43/18$, $A47J\ 27/00$

(30) Priorität : **20.09.90 AT 1909/90**

(43) Veröffentlichungstag der Anmeldung :
**25.03.92 Patentblatt 92/13**

(84) Benannte Vertragsstaaten :
**BE CH DE ES FR GB IT LI SE**

(71) Anmelder : **Eschlböck, Manfred**
**Leonfeldnerstrasse 90**
**A-4040 Linz (AT)**
(71) Anmelder : **Schauer, Dieter**
**Gstöttnerhofstrasse 14**
**A-4040 Linz (AT)**

(72) Erfinder : **Eschlböck, Manfred**
**Leonfeldnerstrasse 90**
**A-4040 Linz (AT)**
Erfinder : **Schauer, Dieter**
**Gstöttnerhofstrasse 14**
**A-4040 Linz (AT)**

(74) Vertreter : **Hübscher, Heiner, Dipl.-Ing. et al**
**Spittelwiese 7**
**A-4020 Linz (AT)**

(54) **Kochgerät zum Garen von Lebensmitteln, insbesondere Fleisch und Fisch.**

㊄  Ein Kochgerät (1) zum Garen von Lebensmitteln besteht aus einem beheizbaren, einen Klappdeckel (3) aufweisenden Behälter (2) zur Aufnahme einer Garflüssigkeit und einem eine gelochte Auflage für das Gargut bildenden Behältereinsatz (7).

Um ein einfaches, handliches, gut zu reinigendes Gerät zu schaffen, das eine rationale Zubereitung besonders würziger und feiner Speisen erlaubt, umfaßt der Behältereinsatz (7) eine am Behälterboden fest abgestützte Zahnplatte (8) mit einer Vielzahl hochstehender Zähne (9) sowie eine federnd nachgiebig abgestützte Lochplatte (10) als Auflage, welche mit ihrer Lochung (11) auf die Zähne (9) der Zahnplatte (8) passende Lochplatte (10) aus einer bei offenem Deckel (3) oberhalb der Zähnen (9) liegenden Auflegestellung durch Schließen des Deckels (3) über eine am Deckel angesetzte Druckplatte (15) bis in eine Garstellung mit durch die Lochung (11) hindurchragenden Zähne (9) niederdrückbar ist, wobei die Füllungshöhe (14) des Behälters (2) im Höhenbereich zwischen der Zahnplatte und der Lochplatten-Auflegestellung liegt.

**EP 0 477 168 A2**

# FIG.1

Die Erfindung bezieht sich auf ein Kochgerät zum Garen von Lebensmitteln, insbesondere Fleisch und Fisch, mit einem beheizbaren, einen Klappdeckel aufweisenden Behälter zur Aufnahme einer Garflüssigkeit und einem eine gelochte Auflage für das Gargut bildenden Behältereinsatz.

Bisher sind diese Kochgeräte mit korbartigen Behältereinsätzen ausgerüstet, die in den Behälter eingehängt werden und dadurch das in sie eingelegte Gut der heißen Garflüssigkeit oder dem entstehenden Dampf aussetzen. Als Garflüssigkeiten werden Öl, suppen und Fonds, aber auch Salzwasser u. dgl. verwendet und je nach Wahl der Flüssigkeit kommt es zu einem Frittieren, Koch oder Dämpfen der Lebensmittel, was diesen eine der Zubereitungsart eigene Geschmacksnote verleiht. Darüber hinaus gibt es verschiedenste Grillgeräte, bei denen das Grillgut auf einen Rost gelegt und der Hitze bzw. dem Rauch eines Feuers bzw. einer anderen Hitzequelle zum Garen ausgesetzt wird. Es wird ein Röst- und Brateffekt mit den für ein Grillen charakteristischen Geschmacksrichtungen erzielt.

Bekannt sind weiters verschiedenste Schinkenkocher, die aus einem dicht verschließbaren, mit einer federbelasteten Druckplatte oder einem federbelasteten beweglichen Deckel ausgerüsteten Behälter zum Aufnehmen und Zusammendrücken des Schinkens od. dgl. bestehen, welche Behälter zur besseren Halterung des Schinkens auch Bodenzinken aufweisen können. Zum Garen werden dann diese Behälter mit dem eingeschlossenen Schinken in eigenen Kochgeräten erhitzt, so daß der Schinken im eigenen Saft gekocht und ein Auslaugen des Fleisches vermieden wird.

Der Erfindung liegt nun die Aufgabe zugrunde, ein Kochgerät der eingangs geschilderten Art zu schaffen, das eine ganz spezielle Garmethode mit sich bringt und bei kürzesten Garzeiten die Zubereitung verschiedenster würziger und geschmacklich hochwertiger Gerichte erlaubt.

Die Erfindung löst diese Aufgabe dadurch, daß der Behältereinsatz eine am Behälterboden fest abgestützen Zahnplatte mit einer Vielzahl hochstehender Zähne od. dgl. sowie eine federnd nachgiebig abgestütze Lochplatte od. dgl. als Auflage umfaßt, welche mit ihrer Lochung auf die Zähne der Zahnplatte passende Lochplatte aus einer bei offenem Deckel oberhalb der Zähne liegenden Auflegestellung durch Schließen des Deckels über eine am Deckel angesetzte Druckplatte gegen die Zahnplatte bis in eine Garstellung mit durch die Lochung hindurchragenden Zähnen niederdrückbar ist, wobei die Füllungshöhe des Behälters für die Garflüssigkeit im Höhenbereich zwischen der Zahnplatte und der Lochplatten-Auflegestellung liegt. Durch das Öffnen des Klappdeckels wird auf Grund der Federbeaufschlagung die Lochplatte hoch- und aus der Flüssigkeit herausgehoben und läßt sich so bequem mit Gargut belegen. Das Schließen des Deckels, bei dem sich die Druckplatte auf das Gargut und die Lochplatte absenkt, führt dann dazu, daß die Lochplatte mit dem Gargut in die heiße Garflüssigkeit eingetaucht und auf die Zahnplatte aufgedrückt wird, bis die Zähne dieser Zahnplatte durch die Lochplatte hindurch in das Gargut eindringen. So kommt es zu einer großflächigen und direkten Wärmeübertragung auf und in das Gargut, das schnell und ohne austrocknen zu können gegart wird. Die das Gargut festhaltenden Zähne verhindern dabei außerdem ein Zusammenziehen des Gutes und ermöglichen es der Garflüssigkeit, intensiv auf das Gargut einzuwirken, wodurch trotz des schnellen Garens das Weichwerden des Gargutes und die gewünschte Würzung gewährleistet wird, welche Würzung ja nicht nur durch das Behandeln des Gargutes selbst, sondern auch über die entsprechend vorbereitete Garflüssigkeit erfolgt. Der beheizbare Behälter sorgt für die erforderliche Erwärmung der Garflüssigkeit und, da die Zahnplatte in dieser Flüssigkeit liegt, ergibt sich auch eine entsprechend gleichmäßige Aufheizung der Zahnplatte samt den Zähnen. Nach dem Garen braucht nur der Klappdeckel wieder geöffnet zu werden und das fertige Gargut läßt sich bequem von der in die Auflegestellung angehobenen Lochplatte abnehmen.

Ist für den Klappdeckel am Behälter ein Spannverschluß vorgesehen, wird das Zusammendrücken von Loch- und Zahnplatte und das Aufdrücken des Gargutes auf die Zähne der Zahnplatte erleichtert und es entsteht ein Verschluß für das Kochgerät, der ohne händisches Zutun die Lochplatte in Garstellung hält und dabei das Gargut auf die Zahnplatte aufdrückt.

Eine besonders einfache Konstruktion ergibt sich, wenn die Zahnplatte Ecksteher trägt, auf die die Lochplatte unter Zwischenlage von Schraubenfedern aufsteckbar ist. Es kommt zu einer guten Führung für die Lochplattenbewegung, wobei sich der Behältereinsatz aus einzelnen Losteilen zusammensetzt und dadurch für eine Reinigung gut zugänglich ist.

Ist der Behälter mit einer bodenseitigen Heizmatte und einem die Garflüssigkeitstemperatur erfassenden Temperaturfühler ausgerüstet, läßt sich das Kochgerät energiesparend betreiben, da die Heizwirkung großflächig auf die Flüssigkeit übertragen werden kann und mittels des Temperaturfühlers eine gute Temperatursteuerung möglich ist.

Als Garflüssigkeit können Öle, Suppen, aber auch nur Wasser od. dgl. verwendet werden und besonders günstig ist es, wenn als Garflüssigkeit ein Gewürzfond vorgesehen ist, da dann die Würze dieses Gewürzfonds die Zubereitung des Gargutes wesentlich beeinflußt und eine besondere Geschmacksnote zu erzielen ist.

In der Zeichnung ist der Erfindungsgegenstand an Hand eines Ausführungsbeispieles rein schematisch veranschaulicht, und zwar zeigen

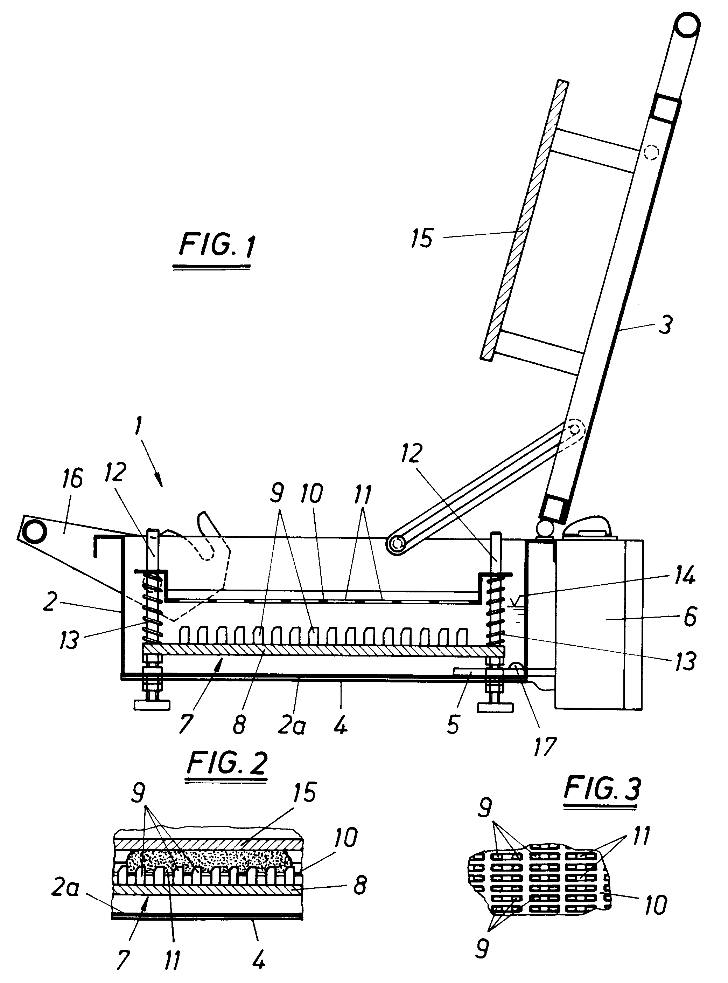

Fig. 1 ein erfindungsgemäßes Kochgerät mit geöffnetem Deckel in Längsschnitt und
Fig. 2 und 3 einen Teil des Behältereinsatzes dieses Kochgerätes bei geschlossenem Deckel im Längsschnitt und in Draufsicht.

Ein Kochgerät 1 zum Garen von Lebensmitteln besteht aus einem Behälter 2 für eine Garflüssigkeit, der über einen Klappdeckel 3 verschließbar ist. Eine im Behälterboden 2a installierte Heizmatte 4 dient zur Behälterbeheizung, wobei ein Temperaturfühler 5 zur Überwachung der Garflüssigkeitstemperatur vorgesehen ist. Ein Schaltkasten 6 erlaubt das Ein- und Ausschalten bzw. das Einstellen der Heizung und nicht weiter dargestellte Zeitschalter, Signaleinrichtungen od. dgl. erleichtern die Handhabung und Bedienung des Gerätes.

Der Behälter 2 nimmt einen Behältereinsatz 7 auf, der sich aus einer bodenseitig fest abstützenden Zahnplatte 8 mit einer Vielzahl hochragender Zähne 9 sowie einer federnd nachgiebig abgestützten Lochplatte 10 mit auf die Zähne 9 passender Lochung 11 zusammensetzt. Die Lochplatte 10 ist dabei auf Ecksteher 12 der Zahnplatte 8 verschiebbar aufgesteckt und die Ecksteher umwindende Schraubenfedern 13 sorgen für die Abstützung. Auf Grund dieser federnd nachgiebigen Lochplattenabstützung liegt die Lochplatte 10 bei geöffnetem Klappdeckel 3 in einer Auflagestellung oberhalb der Zahnplatte 8 und auch oberhalb der Füllstandshöhe 14 der Garflüssigkeit, die aber die Zahnplatte 8 bedeckt.

Der Klappdeckel 3 trägt an seiner Unterseite eine Druckplatte 15, die so weit behälterseitig vorsteht, daß sie beim Schließen des Deckels 3 die Lochplatte 10 unter Zusammendrücken der Schraubfedern 13 nach unten in eine Garstellung drückt, in der sie auf der Zahnplatte 8 aufliegt und die Zähne 9 durch die Lochung 11 hindurchragen. Ein Spannverschluß 16 für den Klappdeckel 3 erlaubt es dabei, den Deckel 3 beim Schließen mit der erforderlichen Schließkraft nach unten zu drücken und in der Verschlußposition zu halten.

Soll nun mit diesem Kochgerät 1 gegart, beispielsweise Fleisch, Fisch, aber auch Gemüse od. dgl. zubereitet werden, wird der Behälter 2 bis zur Füllstandshöhe 14 mit einer Garflüssigkeit, vorzugsweise einem Gewürzfond gefüllt und die Heizmatte 4 eingeschaltet bis die Betriebstemperatur von etwa 95 °C des Fonds erreicht ist. Nun wird der Deckel 3 geöffnet und das leicht gewürzte Gargut auf die in ihrer Auflegestellung oberhalb des Flüssigkeitsspiegels angehobene Lochplatte aufgelegt. Durch ein Schließen des Deckels 3 drückt dann die Druckplatte 15 das Gargut zusammen mit der Lochplatte 10 in die Garstellung nieder, in der das Gargut vollständig vom Fond umspült ist und die durch die Lochung 11 hindurchragenden Zähne 9 der Zahnplatte 8 in das Gargut eingedrungen sind. Da die im Fond liegende Zahnplatte 8 auch die Temperatur des Fonds aufweist, wird diese Gartemperatur nicht nur von außen über den Fond, sondern auch von innen durch die Zähne in das Gargut eingebracht und dieses schockartig über große Flächenbereiche erhitzt, so daß ein schnelles Garen gewährleistet ist. Dabei wird durch das Niederpressen des Gargutes auf die Zähne ein zusätzlicher Erweichungseffekt erreicht, wozu noch das intensive Einwirken der Würze des Fonds kommt. Nach etwa 20 - 30 Sekunden ist das Garen beendet, was durch ein Signal über den Schaltkasten 6 angezeigt werden kann, und das Gargut läßt sich dem Kochgerät 1 entnehmen. Dazu wird der Spannverschluß 16 gelöst und der Klappdeckel 3 geöffnet, wodurch sich zwangsweise die Lochplatte 10 und das daraufliegende Gargut auf Grund der Federbeaufschlagung wieder über die Garflüssigkeit in die Auflegestellung bewegt, und das fertige Gargut kann leicht abgenommen werden.

Da der Behältereinsatz 7 einfach zu zerlegen und aus dem Behälter 2 herauszunehmen ist, gibt es keine Schwierigkeiten bei der Reinigung des Kochgerätes 1, wobei ein Auslaßventil 17 das Entleeren ohne ein Kippen ermöglicht. Es entsteht ein handliches, leicht zu bedienendes, aufwandsarmes Kochgerät, das sich zur rationellen Zubereitung besonders feiner und würziger Speisen eignet.

**Patentansprüche**

1. Kochgerät (1) zum Garen von Lebensmitteln, insbesondere Fleisch und Fisch, mit einem beheizbaren, einen Klappdeckel (3) aufweisenden Behälter (2) zur Aufnahme einer Garflüssigkeit und einem eine gelochte Auflage für das Gargut bildenden Behältereinsatz (7), dadurch gekennzeichnet, daß der Behältereinsatz (7) eine am Behälterboden (2a) fest abgestützte Zahnplatte (8) mit einer Vielzahl hochstehender Zähne (9) od.dgl. sowie eine federnd nachgiebig abgestützte Lochplatte (10) od. dgl. als Auflage umfaßt, welche mit ihrer Lochung (11) auf die Zähne (9) der Zahnplatte (8) passende Lochplatte (10) aus einer bei offenem Deckel (3) oberhalb der Zähne (9) liegenden Auflegestellung durch Schließen des Deckels über eine am Deckel (3) angesetzte Druckplatte (15) gegen die Zahnplatte (8) bis in eine Garstellung mit durch die Lochung(11) hindurchragenden Zähnen (9) niederdrückbar ist, wobei die Füllungshöhe (14) des Behälters (2) für die Garflüssigkeit im Höhenbereich zwischen der Zahnplatte und der Lochplatten-Auflegestellung liegt.

2. Kochgerät nach Anspruch 1, dadurch gekennzeichnet, daß für den Klappdeckel (3) am Behälter (2) ein Spannverschluß (16) vorgesehen ist.

3. Kochgerät nach Anspruch 1 oder 2, dadurch gekennzeichnet, daß die Zahnplatte (8) Rand- oder Ecksteher (12) trägt, auf die die Lochplatte (10) unter Zwischenlage von Schraubenfedern (13) aufsteckbar ist.

4. Kochgerät nach einem der Ansprüche 1 bis 3, dadurch gekennzeichnet, daß der Behälter (2) mit einer bodenseitigen Heizmatte (4) und einem die Garflüssigkeitstemperatur erfassenden Temperaturfühler (5) ausgerüstet ist.

5. Kochgerät nach einem der Ansprüche 1 bis 4, dadurch gekennzeichnet, daß als Garflüssigkeit ein Gewürzfond vorgesehen ist.

_FIG. 1_

_FIG. 2_

_FIG. 3_